(19) Europäisches Patentamt / European Patent Office / Office européen des brevets

(11) **EP 3 692 628 B1**

(12) **EUROPÄISCHE PATENTSCHRIFT**

(45) Veröffentlichungstag und Bekanntmachung des Hinweises auf die Patenterteilung:
**08.12.2021 Patentblatt 2021/49**

(21) Anmeldenummer: **18782399.2**

(22) Anmeldetag: **02.10.2018**

(51) Int Cl.:
**H02P 21/00** *(2016.01)*

(86) Internationale Anmeldenummer:
**PCT/EP2018/076788**

(87) Internationale Veröffentlichungsnummer:
**WO 2019/068706 (11.04.2019 Gazette 2019/15)**

(54) **VERFAHREN ZUM BETREIBEN EINES PERMANENTMAGNETERREGTEN SYNCHRONMOTORS UND MOTORANORDNUNG**

METHOD FOR OPERATING A PERMANENT MAGNET SYNCHRONOUS MOTOR, AND MOTOR ASSEMBLY

PROCÉDÉ POUR FAIRE FONCTIONNER UN MOTEUR SYNCHRONE À AIMANTS PERMANENTS ET ENSEMBLE MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2017 DE 102017217792**

(43) Veröffentlichungstag der Anmeldung:
**12.08.2020 Patentblatt 2020/33**

(73) Patentinhaber: **Continental Teves AG & Co. OHG**
**60488 Frankfurt am Main (DE)**

(72) Erfinder:
• **KAUFMANN, Tom**
 **55566 Ippenschied (DE)**
• **BUDIANU, Bogdan**
 **60488 Frankfurt/Main (DE)**
• **BARTEL, Eugen**
 **35576 Wetzlar (DE)**
• **SCHULTE, Dominik**
 **64367 Mühltal (DE)**

• **STAUDER, Peter**
 **55128 Mainz (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
**DE-A1-102015 224 586    US-A1- 2014 312 812**
**US-A1- 2017 257 055**

• **STEWART P ET AL: "Dynamic control of permanent magnet synchronous motors for automotive drive applications", PROCEEDINGS OF THE 1999 AMERICAN CONTROL CONFERENCE : JUNE 2 - 4, 1999, HYATT REGENCY SAN DIEGO, SAN DIEGO, CALIFORNIA, USA, IEEE SERVICE CENTER, PISCATAWAY, NJ, Bd. 3, 2. Juni 1999 (1999-06-02), Seiten 1677-1681, XP010344588, DOI: 10.1109/ACC.1999.786116 ISBN: 978-0-7803-4990-2**

**Beschreibung**

Die Erfindung betrifft ein Verfahren zum Betreiben eines permanentmagneterregten Synchronmotors sowie eine Motoranordnung mit einem permanentmagneterregten Synchronmotor und einer elektronischen Steuerungsvorrichtung zur Ausführung eines solchen Verfahrens.

US 2014312812 A1 zeigt eine Steuervorrichtung eines Elektromotors, welche eine Stromvektorsteuerung umfasst. Die Stromvektorsteuerung folgt einem Zielbefehlswert zum Steuern eines elektrischen Stroms des Motors, indem der Strom in einen d-Achsenstrom und einen q-Achsenstrom orthogonal zueinander getrennt wird.

Permanentmagneterregte Synchronmotoren können beispielsweise verwendet werden, um ein Bremssystem eines Kraftfahrzeugs zu betätigen. Hierzu wird beispielsweise eine Drehmomentanforderung vorgegeben, wobei der Motor ein entsprechendes Drehmoment erzeugen soll. Permanentmagneterregte Synchronmotoren sind jedoch auch diversen Beschränkungen unterworfen, welche sich beispielsweise auf Strom oder Spannung beziehen. Derartige Beschränkungen sollen im Betrieb eingehalten werden, um eine Fehlfunktion oder Zerstörung des Motors zu vermeiden. Hierzu ist im Zweifelsfall auch in Kauf zu nehmen, dass die Drehmomentanforderung nicht vollständig erfüllt werden kann.

Für den Betrieb permanentmagneterregter Synchronmotoren wird beispielsweise eine Regelung verwendet, die auf dem Prinzip der Feldschwächung basiert, um dem Motor in einem möglichst großen Drehzahlbereich ein konstantes Drehmoment abzuverlangen. Bei Ausführungen, welche aus dem Stand der Technik bekannt sind, werden dabei typischerweise vordefinierte Tabellen verwendet, in welchen berechnete Werte für bestimmte Motorparameter und Beschränkungen abgespeichert sind. Diese sind jedoch statisch und können somit weder an sich tatsächlich einstellende Betriebsparameter angepasst werden noch können diese ohne jeweilige Neuberechnung für unterschiedliche Motoren angewendet werden.

Es ist deshalb eine Aufgabe der Erfindung, ein Verfahren zum Betreiben eines permanentmagneterregten Synchronmotors bereitzustellen, welches diesbezüglich verbessert ist. Es ist des Weiteren eine Aufgabe der Erfindung, eine zugehörige Motoranordnung bereitzustellen.

Dies wird erfindungsgemäß durch ein Verfahren und eine Motoranordnung gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Betreiben eines permanentmagneterregten Synchronmotors, dessen Betriebsparameter in einem zweidimensionalen d/q-Koordinatensystem angegeben werden, wobei das Verfahren folgende Schritte aufweist:

-   Empfangen einer Drehmomentanforderung,
-   Umsetzen der Drehmomentanforderung in einen ersten Zeiger, dessen q-Koordinate zur Drehmomentanforderung korrespondiert, und dessen d-Koordinate Null ist,
-   Darstellen einer Anzahl von Beschränkungen als Flächen im d/q-Koordinatensystem, wobei jede erforderliche Fläche eine Beschränkung derart repräsentiert, dass ein Betriebszeiger innerhalb der erforderlichen Fläche liegen soll, und jede verbotene Fläche eine Beschränkung derart repräsentiert, dass ein Betriebszeiger außerhalb der verbotenen Fläche liegen soll,
-   Überprüfen, ob der erste Zeiger innerhalb aller erforderlichen Flächen und außerhalb aller verbotenen Flächen liegt,

    -   falls ja, Verwenden des ersten Zeigers als Betriebszeiger,
    -   falls nein:

-   Ermitteln jeweiliger höchster q-Koordinaten der erforderlichen Flächen, und Verringern der q-Koordinate des ersten Zeigers auf die niedrigste der höchsten q-Koordinaten der erforderlichen Flächen, dabei Erhalt eines zweiten Zeigers,
-   Überprüfen, ob der zweite Zeiger innerhalb einer ersten erforderlichen Fläche liegt,

    -   falls ja, Verwenden des zweiten Zeigers als dritten Zeiger,
    -   falls nein, Ändern der d-Koordinate des zweiten Zeigers, so dass dieser bei betragsmäßig geringster d-Koordinate auf einer Begrenzung der ersten erforderlichen Fläche liegt, dabei Erhalt eines dritten Zeigers,

-   Überprüfen, ob der dritte Zeiger innerhalb einer zweiten erforderlichen Fläche liegt,

    -   falls ja, Verwenden des dritten Zeigers als vierten Zeiger,
    -   falls nein, Verändern der Koordinaten des dritten Zeigers entlang einer Veränderungsbegrenzung bis zum Schnittpunkt zwischen einer Begrenzung der zweiten erforderlichen Fläche mit der Veränderungsbegrenzung mit höchster q-Koordinate, dabei Erhalt eines vierten Zeigers,

- Ermitteln eines Betriebszeigers basierend auf dem vierten Zeiger,
- Ansteuern des permanentmagneterregten Synchronmotors mittels Betriebsparametern, welche durch den Betriebszeiger angezeigt werden.

Eine solche Verfahrensführung ermöglicht die Ermittlung eines idealen Betriebszeigers. Dabei orientiert sich die q-Koordinate so nahe wie möglich an der Drehmomentanforderung, d.h. sofern ein niedrigeres Drehmoment geliefert wird als angefordert ist es so hoch wie möglich. Außerdem ist die d-Koordinate so niedrig wie möglich, was zu einer geringen Verlustleistung führt.

Das hierin beschriebene Verfahren ist insbesondere mit einer sehr geringen Rechenzeit ausführbar, was die Implementierung in praxistauglichen Motorsteuerungen ermöglicht. Auf aufwändige Berechnungen und auf vordefinierte Tabellen für Beschränkungen kann verzichtet werden.

Das zweidimensionale d/q-Koordinatensystem kann insbesondere auf einer Clarke-Park-Transformation beruhen. Damit können Betriebsparameter des permanentmagneterregten Synchronmotors zweidimensional dargestellt werden.

Der Begriff eines Zeigers ist im Rahmen dieser Anmeldung insbesondere so zu verstehen, dass auf dessen Spitze abgestellt wird. Diese kann beispielsweise verändert werden oder sie kann daraufhin überprüft werden, ob sie innerhalb oder außerhalb eines bestimmten Bereichs liegt.

Hinsichtlich der hier verwendeten q-Koordinaten sei erwähnt, dass der beschriebene Verfahrensablauf von einer positiven Drehmomentanforderung ausgeht, was zu einer positiven q-Koordinate führt. Dies erfolgt, um die Beschreibung einfacher verständlich zu gestalten, beschränkt jedoch nicht den Schutzumfang. Bei einer negativen Drehmomentanforderung, welche beispielsweise zu einer entgegengesetzten Drehrichtung führen kann, wären die Vorzeichen zu ändern.

Falls die q-Koordinate des ersten Zeigers bereits kleiner oder gleich der niedrigsten der höchsten q-Koordinate der erforderlichen Flächen ist, kann auf das Verringern der q-Koordinate verzichtet werden.

Vorteilhaft ist vorgesehen, dass das Verfahren zum Ermitteln eines Betriebszeigers basierend auf dem vierten Zeiger folgende Schritte aufweist:

- Überprüfen, ob der vierte Zeiger innerhalb einer dritten erforderlichen Fläche liegt,

    - falls ja, Verwenden des vierten Zeigers als Betriebszeiger,
    - falls nein, Verändern der Koordinaten des vierten Zeigers entlang der Veränderungsbegrenzung bis zum Schnittpunkt zwischen einer Begrenzung der dritten erforderlichen Fläche mit der Veränderungsbegrenzung mit höchster q-Koordinate, dabei Erhalt des Betriebszeigers.

Die ermöglicht die Berücksichtigung einer weiteren Einschränkung.

Gemäß jeweiliger vorteilhafter Ausführungen des Verfahrens ist vorgesehen, dass

- die erste erforderliche Fläche eine maximale Spannung des Motors definiert, und/oder
- die zweite erforderliche Fläche einen maximalen Strom des Motors definiert, und/oder
- die dritte erforderliche Fläche einen maximalen Batteriestrom definiert.

Dies hat sich für typische Betriebssituationen als praktikables Vorgehen herausgestellt.

Gemäß einer Ausführung ist vorgesehen, dass die Veränderungsbegrenzung eine Begrenzung der ersten erforderlichen Fläche ist. Dies gilt insbesondere in einem Fall, in welchem die Drehmomentanforderung ein Drehmoment zum Antreiben oder Beschleunigen des Motors definiert.

Gemäß einer möglichen Ausführung definiert die Drehmomentanforderung ein Drehmoment zum Antreiben oder Beschleunigen des Motors . Dadurch kann ein Motor in Bewegung versetzt oder erhalten werden.

Gemäß einer möglichen Ausführung definiert die Drehmomentanforderung ein Drehmoment zum Abbremsen des Motors. Dadurch kann ein Motor abgebremst werden, beispielsweise um ihn anzuhalten.

Gemäß einer Ausführung werden vor dem Schritt des Überprüfens, ob der dritte Zeiger innerhalb der zweiten erforderlichen Fläche liegt, folgende Schritte ausgeführt:

- Überprüfen, ob der dritte Zeiger innerhalb einer ersten verbotenen Fläche liegt,

    - falls nein, unverändertes Belassen des dritten Zeigers für den nächsten Schritt,
    - falls ja, vor dem nächsten Schritt betragsmäßiges Erhöhen der d-Koordinate des dritten Zeigers bis zu einer Begrenzung der ersten verbotenen Fläche.

Dadurch kann eine Einhaltung einer durch eine verbotene Fläche darstellbaren Bedingung überprüft bzw. sichergestellt werden.

Gemäß einer Ausführung definiert die erste verbotene Fläche einen minimalen Batteriestrom. Dieser ist insbesondere bei einem bremsenden Drehmoment relevant. Insbesondere in diesem Fall kann der Motor als Generator wirken bzw. betrieben werden.

Gemäß möglicher Ausführungen ist vorgesehen, dass

- falls der dritte Zeiger ansprechend auf das Überprüfen, ob er innerhalb der ersten verbotenen Fläche liegt, unverändert belassen wird, die Veränderungsbegrenzung eine Begrenzung der ersten erforderlichen Fläche ist, und/oder
- falls die d-Koordinate des dritten Zeigers ansprechend auf das Überprüfen, ob er innerhalb der ersten verbotenen Fläche liegt, betragsmäßig erhöht wird, die Veränderungsbegrenzung eine Begrenzung der ersten verbotenen Fläche ist.

Derartige Vorgehensweisen haben sich für typische Anwendungsfälle als vorteilhaft erwiesen.

Gemäß jeweiliger Ausführungen ist vorgesehen, dass

- die erste erforderliche Fläche eine maximale Spannung des Motors definiert, und/oder
- die zweite erforderliche Fläche eine maximale Spannung des Motors definiert, und/oder
- die dritte erforderliche Fläche einen maximalen Strom des Motors definiert.

Dies hat sich für typische reale Fälle als vorteilhaft erwiesen, um zum bestmöglichen Ergebnis zu kommen.

Gemäß einer Ausführung ist vorgesehen, dass die d-Koordinaten aller Zeiger negativ sind. Dies entspricht typischen und vorteilhaften Betriebssituationen.

Die Zeiger werden bevorzugt entlang der Veränderungsbegrenzung mittels Berechnen von Schnittpunkten verschoben. Dabei können beispielsweise Funktionen und/oder Parametrisierungen verwendet werden.

Bevorzugt sind die erforderlichen Flächen und/oder die verbotenen Flächen Kreise. Dadurch lassen sich typische Beschränkungen, insbesondere der angegebenen Arten, darstellen.

Gemäß einer Ausführung ist vorgesehen, dass zumindest eine erforderliche Fläche, welche eine maximale Spannung des Motors definiert, von einer Drehzahl des Motors abhängt. Dies gibt in typischen Anwendungsfällen ein reales Verhalten wieder.

Es sei erwähnt, dass ein Verfahren insbesondere auch so implementiert werden kann, dass es sowohl für beschleunigende wie auch für bremsende Drehmomentanforderungen ausführbar ist.

Es sei verstanden, dass das erfindungsgemäße Verfahren insbesondere in einem Kraftfahrzeug oder in einem Bremssystem eines Kraftfahrzeugs angewendet werden kann. Beispielsweise kann der permanentmagneterregte Synchronmotor eine Bremskraft eines Bremssystems eines Kraftfahrzeugs bereitstellen oder erzeugen.

Die Erfindung betrifft des Weiteren eine Motoranordnung, welche einen permanentmagneterregten Synchronmotor und eine elektronische Steuerungsvorrichtung aufweist, welche dazu konfiguriert ist, ein Verfahren gemäß der Erfindung auszuführen. Bezüglich des Verfahrens kann auf alle hierin beschriebenen Ausführungen und Varianten zurückgegriffen werden. Mittels der erfindungsgemäßen Motoranordnung können die weiter oben erwähnten Vorteile erreicht werden.

Weitere Merkmale und Vorteile wird der Fachmann dem nachfolgend mit Bezug auf die beigefügte Zeichnung beschriebenen Ausführungsbeispiel entnehmen. Dabei zeigen:

Fig. 1: eine Motoranordnung,
Fig. 2: eine schematische Vorgehensweise bei der Steuerung eines Motors,
Fig. 3: typische Beschränkungen in einem d/q-Koordinatensystem,
Fig. 4: eine Vorgehensweise bei der Ermittlung eines Betriebszeigers bei positivem Drehmoment, und
Fig. 5: eine Vorgehensweise bei der Ermittlung eines Betriebszeigers bei negativem Drehmoment.

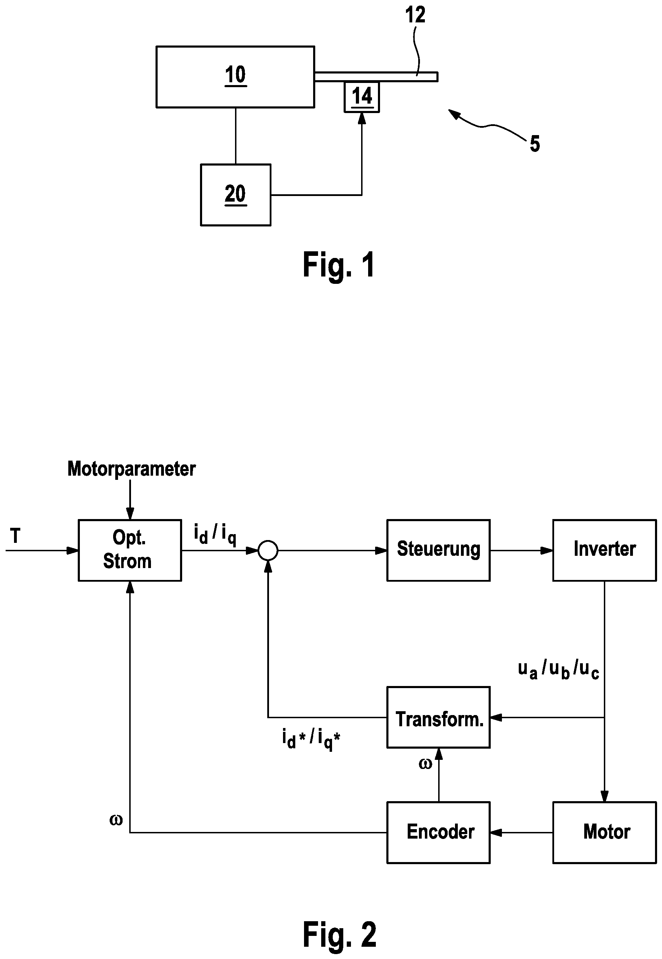

Fig. 1 zeigt eine Motoranordnung 5 gemäß einem Ausführungsbeispiel der Erfindung. Die Motoranordnung 5 weist einen permanentmagneterregten Synchronmotor 10 auf. Dieser weist eine Welle 12 auf, welche sich beim Betrieb des permanentmagneterregten Synchronmotors 10 dreht.

An der Welle 12 ist ein Drehzahlsensor 14 angebracht, welcher eine jeweilige Drehzahl der Welle 12 abfühlt.

Die Motoranordnung 5 weist des Weiteren eine elektronische Steuerungsvorrichtung 20 auf. Diese ist dazu ausgebildet, den Motor 10 zu steuern, beispielsweise wie dies weiter unten beschrieben wird.

Der Motor 10 kann insbesondere nach dem Prinzip einer Feldschwächung gesteuert werden. Dadurch kann ihm ein konstantes Drehmoment in einem möglichst großen Drehzahlbereich abverlangt werden. Da der Strom typischerweise proportional zum Drehmoment ist, erfolgt die Realisierung einer Momentenanforderung beispielsweise über einen Stromregler, welcher in Fig. 2 dargestellt ist.

Fig. 2 zeigt demgemäß lediglich schematisch eine Vorgehensweise bei der Regelung eines Stroms bzw. einen Stromregler. Dabei werden Ströme $i_d$ und $i_q$ in einem d/q-Koordinatensystem verwendet, welche durch eine Clarke-Park-Transformation erhalten werden. Damit können die Betriebsparameter eines permanentmagneterregten Synchronmotors zweidimensional dargestellt werden.

Es sei erwähnt, dass zur Berechnung eines optimalen Stroms ("Opt. Current") wie gezeigt eine Drehmomentanforderung T sowie Motorparameter ("Motorparameters") verwendet werden. Des Weiteren werden eine Steuerung ("controller"), ein Inverter, ein Transformer und ein Encoder verwendet. Dabei gehen auch Spannungsgrößen $u_a/u_b/u_c$ in die Berechnung ein.

Da der Regler in einem Verbund mit anderen Systemen arbeitet, muss sich dieser an Strom- und Spannungsbegrenzungen des Motors 10 bzw. des Systemverbunds halten. Aufgrund dieser Begrenzungen kann nicht jede Drehmomentanforderung bzw. Momentenanforderung proportional in eine Stromführungsgröße umgerechnet werden. Eine Momentenanforderung soll, wenn möglich, direkt umgerechnet werden. Falls dies jedoch nicht möglich ist, weil eine der Begrenzungen verletzt werden würde, soll die nächst niedrigere mögliche Momentenanforderung bestimmt werden.

Grenzbedingungen für Ströme und Spannungen können folgendermaßen wiedergegeben werden:

$$I_{dq} \leq I_{dq\,max} \qquad (1)$$

$$U_{dq} \leq U_{dq\,max} \qquad (2)$$

$$I_{bat\,min} \leq I_{bat} \leq I_{bat\,max} \qquad (3)$$

Dabei bezeichnet $I_{dq}$ den Strom im d/q-Koordinatensystem, $I_{dqmax}$ den maximalen Strom im d/q-Koordinatensystem, $U_{dq}$ die Spannung im d/q-Koordinatensystem, $U_{dqmax}$ die maximale Spannung im d/q-Koordinatensystem, $I_{batmin}$ den minimalen Batteriestrom, $I_{batmax}$ den maximalen Batteriestrom und $I_{bat}$ den Batteriestrom.

Durch die Gleichungen (1), (2) und (3) werden somit ein maximaler Strom des Motors, eine maximale Spannung des Motors, ein minimaler Batteriestrom und ein maximaler Batteriestrom als Grenzbedingungen definiert. Dies sind typische Grenzbedingungen bei der Anwendung eines permanentmagneterregten Synchronmotors, insbesondere im Automobilbereich.

Die Ströme $i_d$, $i_q$ im d/q-Koordinatensystem können in jeweilige Spannungen $u_d$, $u_q$ im d/q-Koordinatensystem umgerechnet werden und umgekehrt:

$$u_d = R i_d - p\omega_m L_q i_q \qquad (4)$$

$$u_q = R i_q + p\omega_m L_d i_d + p\omega_m \varphi_{pm} \qquad (5)$$

Dabei bezeichnet R den Widerstand des Motors, p die Polpaarzahl, welche beispielsweise einen Wert von 7 haben kann, $\omega_m$ die Drehzahl, $L_q$ die Induktivität in q-Koordinate, $L_d$ die Induktivität in d-Koordinate und $\varphi_{pm}$ den magnetischen Fluss.

Des Weiteren kann die Leistungsbilanz

$$I_{bat} = \frac{3 i_q \varphi_{pm} \omega_m p + 3R(i_d^2 + i_q^2)}{2 U_{bat}} \qquad (6)$$

verwendet werden. Dabei bezeichnet ferner $U_{bat}$ die Batteriespannung.

Des Weiteren sei noch die Momentengleichung für reluktanzfreie permanentmagneterregte Synchronmotoren erwähnt:

$$Tm = \frac{3}{2} i_q \varphi_{pm} p \qquad (7)$$

Dabei bezeichnet $T_m$ ein mechanisches Drehmoment.

Daraus ergeben sich die folgenden Kreisgleichungen:

$$I^2_{dq\,max} \geq i^2_d + i^2_q \qquad (8)$$

$$\frac{U^2_{bat}}{3Z} \geq \left( i_d + \frac{L\varphi_{pm}(\omega_m p)^2}{Z} \right) + \left( i_q + \frac{R\varphi_{pm}\omega_m}{Z} \right)^2 \qquad (9)$$

$$\frac{2I_{bat\,max}U_{bat}}{3R} + \frac{k^2_t \omega^2_m}{9R^2} \geq \left( i_q + \frac{k_t \omega_m}{3R} \right)^2 + i^2_d \qquad (10)$$

$$\frac{2I_{bat\,min}U_{bat}}{3R} + \frac{k^2_t \omega^2_m}{9R^2} \leq \left( i_q + \frac{k_t \omega_m}{3R} \right)^2 + i^2_d \qquad (11)$$

$$Z = R^2 + L^2(\omega_m p)^2 \qquad (12)$$

Dabei bezeichnen ferner Z eine Ersatzgröße für einen komplexen Widerstand und $k_t$ bezeichnet eine Drehmomentkonstante, welche typischerweise mit dem magnetischen Fluss über die Beziehung $\varphi_{pm} = \frac{2}{3} \cdot \frac{k_t}{p}$ zusammenhängt.

Die Kreisgleichungen schließen eine gemeinsame Fläche ein, die von der Motordrehzahl $\omega_m$ abhängig ist. Um alle Bedingungen zu erfüllen, muss ein Stromzeiger bzw. Betriebszeiger innerhalb dieser Fläche und außerhalb des minimalen Stromkreises liegen.

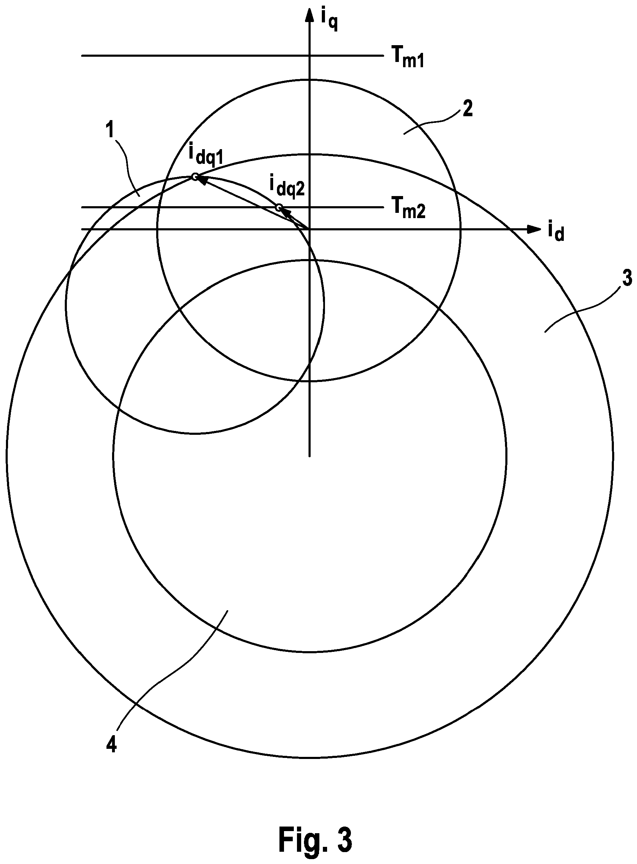

Fig. 3 zeigt die Kreise in der Stromebene. Dabei sind ein Spannungskreis 1, ein Motorstromkreis 2, ein maximaler Batteriestromkreis 3 und ein minimaler Batteriestromkreis 4 dargestellt. Die Darstellung erfolgt hier in einem d/q-Koordinatensystem mit einem d-Strom $i_d$ und einem q-Strom $i_q$.

In Fig. 3 ist des Weiteren eine erste Drehmomentanforderung $T_{m1}$ dargestellt. Es ist ersichtlich, dass diese bei Umrechnung in eine q-Koordinate außerhalb der Begrenzungen liegt und somit nicht als solche realisierbar ist. Des Weiteren ist auch eine zweite Drehmomentanforderung $T_{m2}$ dargestellt, welche realisierbar ist.

Die erste Drehmomentanforderung $T_{m1}$ kann mittels eines ersten Zeigers $i_{dq1}$ teilweise realisiert werden, d.h. es kann ein maximal mögliches Drehmoment erzeugt werden, welches mit allen gegebenen Rahmenbedingungen konsistent ist. Die zweite Drehmomentanforderung $T_{m2}$ kann mittels eines zweiten Zeigers $i_{dq2}$ unmittelbar realisiert werden. Die beiden Zeiger $i_{dq1}$, $i_{dq2}$ sind dabei jeweils so gewählt, dass sie bei möglichst guter Erfüllung der jeweiligen Drehmomentanforderung $T_{m1}$, $T_{m2}$ die niedrigst mögliche d-Koordinate haben, um eine möglichst geringe Verlustleistung zu erzeugen.

Das zu lösende Problem ist es, eine Berechnungsstrategie aufzustellen, die mit möglichst geringem Rechenaufwand einen optimalen Stromzeiger ermittelt. Ein optimaler Stromzeiger ist hierbei typischerweise ein Stromzeiger, der keine der aufgeführten Begrenzungen verletzt, einen momentenbildenden q-Strom enthält, der ein Moment generiert, das möglichst genau mit dem geforderten Moment übereinstimmt, und einen möglichst geringen d-Strom, insbesondere betragsmäßig gesehen, beinhaltet.

Es sei erwähnt, dass die zweite Drehmomentanforderung $T_{m2}$ auch durch andere Zeiger umgesetzt werden könnte. Diese haben jedoch einen betragsmäßig höheren d-Strom und sind deshalb nicht optimal.

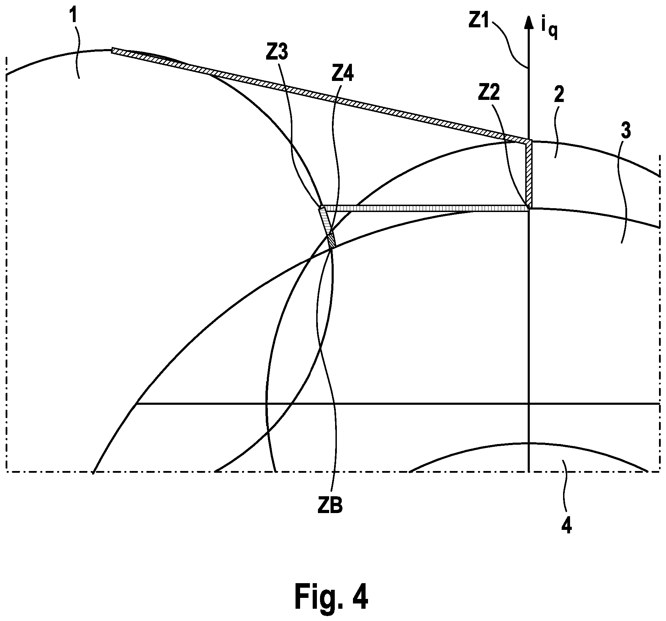

Eine mögliche Vorgehensweise im Rahmen eines erfindungsgemäßen Verfahrens wird nachfolgend beschrieben. Dabei wird ein schrittweiser Ansatz verfolgt, welcher zu einem Betriebszeiger führt. Dieser Ansatz ist mit Bezug auf Fig. 4 dargestellt.

Zunächst wird eine Drehmomentanforderung $T_m$ in einen q-Strom $i_q$ umgerechnet. Dies erfolgt mittels folgender Gleichung:

$$i_q = \frac{2T_m}{3\varphi_{pm}p} \qquad (13)$$

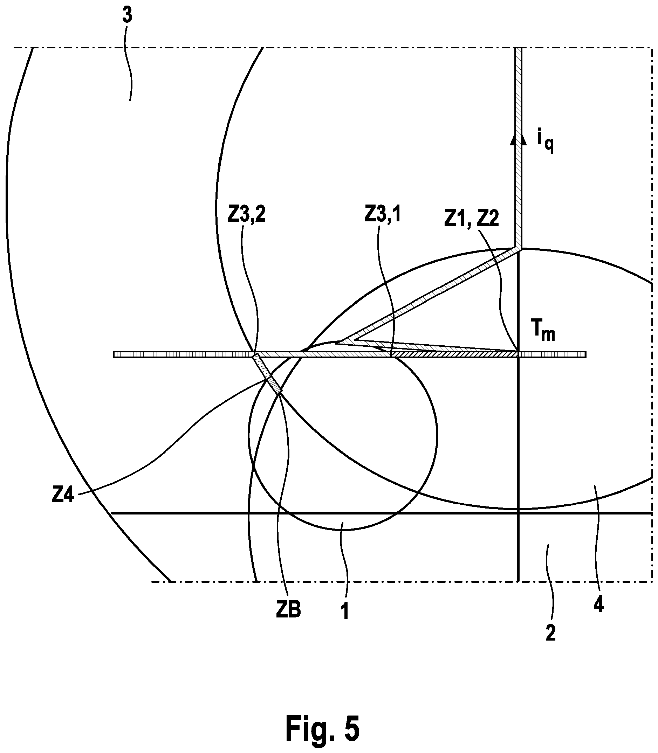

Hieraus wird ein erster Zeiger Z1 berechnet, welcher sich dadurch ergibt, dass die q-Koordinate auf den berechneten Wert $i_q$ gesetzt wird und die d-Koordinate auf den Wert 0 gesetzt wird. Dieser Zeiger Z1 ist in Fig. 4 eingezeichnet. Es sei erwähnt, dass bei den Fig. 4 und 5 die eingezeichneten Zeiger lediglich dergestalt eingezeichnet sind, dass ihre jeweiligen Endpunkte durch die Verbindungslinien mit der jeweiligen Bezeichnung angezeigt sind. Die kompletten Zeiger sind nicht als solche dargestellt, um die Darstellung zu vereinfachen.

Der erste Zeiger Z1 ist, wie gezeigt, zunächst außerhalb der angezeigten Begrenzungen. Nachdem dies festgestellt wurde, wird die q-Koordinate des ersten Zeigers Z1 so weit verringert, dass seine q-Koordinate der q-Koordinate des niedrigsten aller höchsten Punkte der erforderlichen Flächen 1, 2, 3 entspricht. Dadurch wird ein zweiter Zeiger Z2 erhalten.

Anschließend wird überprüft, ob der zweite Zeiger Z2 innerhalb der ersten erforderlichen Fläche 1, also des Spannungskreises, liegt. Dies ist nicht der Fall. Somit wird die d-Koordinate des zweiten Zeigers Z2 betragsmäßig erhöht, bis der zweite Zeiger Z2 bei gleichbleibender q-Koordinate auf der Begrenzung der ersten erforderlichen Fläche 1 zu liegen kommt. Dadurch wird ein dritter Zeiger Z3 erhalten.

Mit dem dritten Zeiger Z3 wird dann eine Überprüfung durchgeführt, ob dieser innerhalb der zweiten erforderlichen Fläche 2, also dem Motorstromkreis, liegt. Dies ist nicht der Fall. Der dritte Zeiger Z3 wird sodann entlang der Begrenzung der ersten erforderlichen Fläche 1 so lange verändert, bis er die Begrenzung der zweiten erforderlichen Fläche 2 schneidet. Dadurch wird ein vierter Zeiger Z4 erhalten. Der vierte Zeiger Z4 wird daraufhin überprüft, ob er innerhalb einer dritten erforderlichen Fläche 3 liegt. Dies ist nicht der Fall. Somit wird der vierte Zeiger Z4 entlang der Begrenzung der ersten erforderlichen Fläche 1 weiter so lange verändert, bis er eine Begrenzung der dritten erforderlichen Fläche 3 schneidet. Dadurch wird ein Betriebszeiger ZB erhalten. Dieser liegt innerhalb aller erforderlichen Flächen 1, 2, 3 und außerdem außerhalb der einzigen verbotenen Fläche 4.

Mittels des Betriebszeigers ZB kann somit ein Betrieb des Motors erfolgen, wobei das maximal mögliche Drehmoment erreicht wird und gleichzeitig die niedrigst mögliche d-Koordinate verwendet wird.

Die weiter oben erwähnten Hochpunkte der erforderlichen Flächen 1, 2, 3 können bezüglich ihrer jeweiligen q-Koordinate, welche hier relevant ist, durch folgende Gleichungen berechnet werden:

$$i_{hpc} = I_{dq\,max} \qquad (14)$$

$$i_{hpv} = \sqrt{\frac{U_{bat}^2}{3Z} - \frac{R\varphi_{pm}\omega_m}{Z}} \qquad (15)$$

$$i_{hpb} = \sqrt{\frac{2I_{bat\,max}U_{bat}}{3R} + \frac{k_t^2\omega_m^2}{9R^2} - \frac{k_t\omega_m}{3R}} \qquad (16)$$

Dabei bezeichnet $i_{hpc}$ die q-Koordinate des Hochpunkts des Stromkreises, $i_{hpv}$ die q-Koordinate des Hochpunkts des Spannungskreises und $i_{hpb}$ die q-Koordinate des Hochpunkts des Batteriestromkreises.

Da der Spannungskreis von der Winkelgeschwindigkeit $\omega_m$ abhängt, sinkt sein Radius bei höheren Drehzahlen. Dies wird beispielsweise durch die obige Gleichung (9) wiedergegeben.

Es sei erwähnt, dass die erwähnten Schnittpunkte jeweils auch grundsätzlich andere Lösungen haben können. Hier werden jedoch grundsätzlich diejenigen mit höchster q-Koordinate und kleinster d-Koordinate verwendet. Die anderen sind für die hier relevante Berechnung nicht zielführend.

Bei einem Betrieb des Motors mit einer beschleunigenden Drehmomentanforderung kann der minimale Batteriestromkreis als einzig vorhandene verbotene Fläche 4 außer Acht gelassen werden, da deren Beschränkung grundsätzlich erfüllt ist. Dies gilt jedoch nicht, wenn ein Drehmoment zum Abbremsen erzeugt wird, wenn der Motor mithin als Generator läuft. Ein entsprechender Zustand ist in Fig. 5 dargestellt.

Auch in Fig. 5 sind die erforderlichen Flächen 1, 2, 3 sowie die verbotene Fläche 4 dargestellt. Die erste erforderliche Fläche 1, also der Spannungskreis, liegt jedoch an einer anderen Stelle und ist kleiner. Außerdem wird der Motor als Generator betrieben, wobei ein hier positiv gezeigtes Drehmoment $T_m$ zum Abbremsen eines negativ drehenden Motors dienen soll.

Die in Fig. 5 dargestellte Drehmomentanforderung $T_m$ lässt sich unmittelbar in einen ersten Zeiger Z1 umrechnen, welcher bereits unterhalb aller Hochpunkte der erforderlichen Flächen 1, 2, 3 liegt. Somit kann dieser unmittelbar als zweiter Zeiger Z2 verwendet werden.

Anschließend wird überprüft, ob der zweite Zeiger Z2 innerhalb der ersten erforderlichen Fläche 1, also des Spannungskreises, liegt. Dies ist nicht der Fall. Dementsprechend wird die d-Koordinate des zweiten Zeigers Z2 so lange erhöht, bis der zweite Zeiger Z2 auf einer Begrenzung der ersten erforderlichen Fläche 1 liegt. Dadurch wird ein dritter Zeiger Z3,1 in einer ersten Version erhalten.

Der dritte Zeiger Z3,1 in der ersten Version wird daraufhin überprüft, ob dieser außerhalb der ersten verbotenen Fläche 4, also des minimalen Batteriestromkreises, liegt. Dies ist nicht der Fall. Dementsprechend wird die q-Koordinate des dritten Zeigers Z3,1 in seiner ersten Version weiter erhöht, bis dieser außerhalb der ersten verbotenen Fläche 4 liegt. Dadurch wird der dritte Zeiger Z3,2 in einer zweiten Version erhalten. Diese wird dann weiter verwendet wie ein dritter Zeiger Z3 wie weiter oben beschrieben.

Es wird anschließend überprüft, ob der dritte Zeiger Z3, 2 wie eben erhalten innerhalb der ersten erforderlichen Fläche 1 liegt. Dies ist nicht der Fall. Anschließend wird der dritte Zeiger Z3,2 in seiner zweiten Version so lange entlang der Begrenzung der ersten verbotenen Fläche 4 verändert, bis er auf einer Begrenzung der ersten erforderlichen Fläche 1 zu liegen kommt. Dadurch wird ein vierter Zeiger Z4 erhalten.

Der vierte Zeiger Z4 wird dann daraufhin überprüft, ob er innerhalb der zweiten erforderlichen Fläche Z2 liegt. Dies ist nicht der Fall. Dementsprechend wird der vierte Zeiger Z4 so lange entlang der Begrenzung der ersten verbotenen Fläche 4 weiter verändert, bis er auf einer Begrenzung der zweiten erforderlichen Fläche 2 zu liegen kommt. Dadurch wird der Betriebszeiger ZB erhalten. Dieser liegt innerhalb aller erforderlichen Flächen 1, 2, 3 und außerhalb der ersten verbotenen Fläche 4. Mit diesem kann somit ein Betrieb des Motors erfolgen.

Da die Parameter des Motors und des Systemzustands die Position und die Größe der Kreise verändern, kann es in manchen Situationen notwendig sein, ein weiteres Mal oder auch mehrmals die beschriebenen Prozesse durchzuführen, insbesondere einschließlich einer jeweiligen Neuberechnung der Kreise. Dadurch können optimale und aktualisierte Betriebsparameter erhalten werden.

Der beschriebene Verfahrensablauf bzw. ein Verfahrensablauf kann beispielsweise folgendermaßen dargestellt werden:

- Berechnen des $i_q$-Stroms zu einer gegebenen Drehmomentanforderung,
- finde einen Punkt auf dem Spannungskreis,
- finde einen Punkt auf dem Motorstromkreis,
- finde einen Punkt auf dem Batteriestromkreis,
- wiederhole die drei vorhergehenden Schritte, wenn notwendig.

Wichtig kann die Reihenfolge sein, gemäß welcher der Spannungskreis zuerst verwendet wird und man dann mit den Begrenzungen der Kreise weitermacht, um den optimalen Zeiger als Betriebszeiger zu erreichen.

Es sei verstanden, dass Begrenzungen einer jeweiligen Fläche jeweils sowohl der Fläche wie auch der Umgebung der Fläche zugerechnet werden können.

Die hierin erwähnten Schritte zur Berechnung bzw. Ermittlung des Betriebszeigers können insbesondere elektronisch, beispielsweise von einer programmierbaren oder festverdrahteten Einheit, ausgeführt werden. Der Betriebszeiger kann automatisiert berechnet werden.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

**Patentansprüche**

1. Verfahren zum Betreiben eines permanentmagneterregten Synchronmotors (10), dessen Betriebsparameter in einem zweidimensionalen d/q-Koordinatensystem angegeben werden, wobei das Verfahren folgende Schritte aufweist:

   - Empfangen einer Drehmomentanforderung (Tm),
   - Umsetzen der Drehmomentanforderung (Tm) in einen ersten Zeiger (Z1), dessen q-Koordinate zur Drehmomentanforderung (Tm) korrespondiert, und dessen d-Koordinate Null ist,
   - Darstellen einer Anzahl von Beschränkungen als Flächen (1, 2, 3, 4) im d/q-Koordinatensystem, wobei jede erforderliche Fläche (1, 2, 3) eine Beschränkung derart repräsentiert, dass ein Betriebszeiger (ZB) innerhalb der erforderlichen Fläche (1, 2, 3) liegen soll, und jede verbotene Fläche (4) eine Beschränkung derart repräsentiert, dass ein Betriebszeiger (ZB) außerhalb der verbotenen Fläche (4) liegen soll, wobei das Verfahren **dadurch gekennzeichnet ist, dass** es die folgenden Schritte aufweist:
   - Überprüfen, ob der erste Zeiger (Z1) innerhalb aller erforderlichen Flächen (1, 2, 3) und außerhalb aller verbotenen Flächen (4) liegt,

     - falls ja, Verwenden des ersten Zeigers (Z1) als Betriebszeiger (ZB),
     - falls nein:

   - Ermitteln jeweiliger höchster q-Koordinaten der erforderlichen Flächen (1, 2, 3), und Verringern der q-Koordinate des ersten Zeigers (Z1) auf die niedrigste der höchsten q-Koordinaten der erforderlichen Flächen (1, 2, 3), dabei Erhalt eines zweiten Zeigers (Z2),
   - Überprüfen, ob der zweite Zeiger (Z2) innerhalb einer ersten erforderlichen Fläche (1) liegt,

     - falls ja, Verwenden des zweiten Zeigers (Z2) als dritten Zeiger (Z3),
     - falls nein, Ändern der d-Koordinate des zweiten Zeigers (Z2), so dass dieser bei betragsmäßig geringster d-Koordinate auf einer Begrenzung der ersten erforderlichen Fläche (1) liegt, dabei Erhalt eines dritten Zeigers (Z3),

   - Überprüfen, ob der dritte Zeiger (Z3) innerhalb einer zweiten erforderlichen Fläche (2) liegt,

     - falls ja, Verwenden des dritten Zeigers (Z3) als vierten Zeiger (Z4),
     - falls nein, Verändern der Koordinaten des dritten Zeigers (Z3) entlang einer Veränderungsbegrenzung bis zum Schnittpunkt zwischen einer Begrenzung der zweiten erforderlichen Fläche (2) mit der Veränderungsbegrenzung mit höchster q-Koordinate, dabei Erhalt eines vierten Zeigers (Z4),

   - Ermitteln eines Betriebszeigers (ZB) basierend auf dem vierten Zeiger (Z4),
   - Ansteuern des permanentmagneterregten Synchronmotors (10) mittels Betriebsparametern, welche durch den Betriebszeiger (ZB) angezeigt werden.

2. Verfahren nach Anspruch 1, welches zum Ermitteln eines Betriebszeigers (ZB) basierend auf dem vierten Zeiger (Z4) folgende Schritte aufweist:

   - Überprüfen, ob der vierte Zeiger (Z4) innerhalb einer dritten erforderlichen Fläche (3) liegt,

     - falls ja, Verwenden des vierten Zeigers (Z4) als Betriebszeiger (ZB),
     - falls nein, Verändern der Koordinaten des vierten Zeigers (Z4) entlang der Veränderungsbegrenzung bis zum Schnittpunkt zwischen einer Begrenzung der dritten erforderlichen Fläche (3) mit der Veränderungsbegrenzung mit höchster q-Koordinate, dabei Erhalt des Betriebszeigers (ZB).

3. Verfahren nach einem der vorhergehenden Ansprüche,

   - wobei die erste erforderliche Fläche (1) eine maximale Spannung des Motors (10) definiert, und/oder
   - wobei die zweite erforderliche Fläche (2) einen maximalen Strom des Motors (10) definiert, und/oder
   - wobei die dritte erforderliche Fläche (3) einen maximalen Batteriestrom definiert.

4. Verfahren nach einem der vorhergehenden Ansprüche,

- wobei die Veränderungsbegrenzung eine Begrenzung der ersten erforderlichen Fläche (1) ist.

5. Verfahren nach einem der vorhergehenden Ansprüche,

- wobei die Drehmomentanforderung (Tm) ein Drehmoment zum Antreiben oder Beschleunigen des Motors (10) definiert.

6. Verfahren nach einem der Ansprüche 1 bis 4,

- wobei die Drehmomentanforderung (Tm) ein Drehmoment zum Abbremsen des Motors (10) definiert.

7. Verfahren nach Anspruch 6, wobei vor dem Schritt des Überprüfens, ob der dritte Zeiger (Z3) innerhalb der zweiten erforderlichen Fläche (2) liegt, folgende Schritte ausgeführt werden:

- Überprüfen, ob der dritte Zeiger (Z3,1) innerhalb einer ersten verbotenen Fläche (4) liegt,

- falls nein, unverändertes Belassen des dritten Zeigers (Z3) für den nächsten Schritt,
- falls ja, vor dem nächsten Schritt betragsmäßiges Erhöhen der d-Koordinate des dritten Zeigers (Z3,1) bis zu einer Begrenzung der ersten verbotenen Fläche (4) .

8. Verfahren nach Anspruch 7,

- wobei die erste verbotene Fläche (4) einen minimalen Batteriestrom definiert.

9. Verfahren nach einem der Ansprüche 7 oder 8,

- wobei falls der dritte Zeiger (Z3) ansprechend auf das Überprüfen, ob er innerhalb der ersten verbotenen Fläche (4) liegt, unverändert belassen wird, die Veränderungsbegrenzung eine Begrenzung der ersten erforderlichen Fläche (1) ist,

und/oder

- wobei falls die d-Koordinate des dritten Zeigers (Z3) ansprechend auf das Überprüfen, ob er innerhalb der ersten verbotenen Fläche (4) liegt, betragsmäßig erhöht wird, die Veränderungsbegrenzung eine Begrenzung der ersten verbotenen Fläche (4) ist.

10. Verfahren nach einem der vorhergehenden Ansprüche,

- wobei die d-Koordinaten aller Zeiger (Z) negativ sind.

11. Verfahren nach einem der vorhergehenden Ansprüche,

- wobei die Zeiger (Z) entlang der Veränderungsbegrenzung mittels Berechnen von Schnittpunkten verschoben werden.

12. Verfahren nach einem der vorhergehenden Ansprüche,

- wobei die erforderlichen Flächen (1, 2, 3) und/oder die verbotenen Flächen (4) Kreise sind.

13. Verfahren nach einem der vorhergehenden Ansprüche,

- wobei zumindest eine erforderliche Fläche (1), welche eine maximale Spannung des Motors definiert, von einer Drehzahl des Motors (10) abhängt.

14. Motoranordnung (5), aufweisend,

- einen permanentmagneterregten Synchronmotor (10), und
- eine elektronische Steuerungsvorrichtung (20), welche dazu konfiguriert ist, ein Verfahren gemäß einem der vorhergehenden Ansprüche auszuführen.

**Claims**

1. Method for operating a permanent magnet synchronous motor (10), the operating parameters of which are specified in a two-dimensional d/q coordinate system, the method comprising the following steps:

    - receiving a torque request (Tm),
    - converting the torque request (Tm) into a first vector (Z1), the q coordinate of which corresponds to the torque request (Tm) and the d coordinate of which is zero,
    - representing a number of constraints as areas (1, 2, 3, 4) in the d/q coordinate system, each required area (1, 2, 3) representing a constraint such that an operational vector (ZB) should lie within the required area (1, 2, 3), and each prohibited area (4) representing a constraint such that an operational vector (ZB) should lie outside the prohibited area (4), wherein the method is **characterized in that** it has the following steps:
    - checking whether the first vector (Z1) lies within all of the required areas (1, 2, 3) and outside all of the prohibited areas (4),

        - if so, using the first vector (Z1) as an operational vector (ZB),
        - if not:

    - determining respective highest q coordinates of the required areas (1, 2, 3), and reducing the q coordinate of the first vector (Z1) to the lowest of the highest q coordinates of the required areas (1, 2, 3), thereby obtaining a second vector (Z2),
    - checking whether the second vector (Z2) lies within a first required area (1),

        - if so, using the second vector (Z2) as a third vector (Z3),
        - if not, changing the d coordinate of the second vector (Z2), so that it lies on a limitation of the first required area (1) with the smallest amount of the d coordinate, thereby obtaining a third vector (Z3),

    - checking whether the third vector (Z3) lies within a second required area (2),

        - if so, using the third vector (Z3) as a fourth vector (Z4),
        - if not, changing the coordinates of the third vector (Z3) along a change limitation up to the point of intersection between a limitation of the second required area (2) with the change limitation with the highest q coordinate, thereby obtaining a fourth vector (Z4),

    - determining an operational vector (ZB) on the basis of the fourth vector (Z4),
    - activating the permanent magnet synchronous motor (10) by means of operational parameters that are indicated by the operational vector (ZB).

2. Method according to Claim 1, which comprises the following steps for determining an operational vector (ZB) on the basis of the fourth vector (Z4):

        - checking whether the fourth vector (Z4) lies within a third required area (3),

            - if so, using the fourth vector (Z4) as an operational vector (ZB),
            - if not, changing the coordinates of the fourth vector (Z4) along a change limitation up to the point of intersection between a limitation of the third required area (3) with the change limitation with the highest q coordinate, thereby obtaining the operational vector (ZB).

3. Method according to one of the preceding claims,

        - wherein the first required area (1) defines a maximum voltage of the motor (10), and/or
        - wherein the second required area (2) defines a maximum current of the motor (10), and/or
        - wherein the third required area (3) defines a maximum battery current.

4. Method according to one of the preceding claims,

- wherein the change limitation is a limitation of the first required area (1).

5. Method according to one of the preceding claims,

  - wherein the torque request (Tm) defines a torque for driving or accelerating the motor (10).

6. Method according to one of Claims 1 to 4,

  - wherein the torque request (Tm) defines a torque for braking the motor (10).

7. Method according to Claim 6, wherein, before the step of checking whether the third vector (Z3) lies within the second required area (2), the following steps are performed:

  - checking whether the third vector (Z3,1) lies within a first prohibited area (4),

    - if not, leaving the third vector (Z3) unchanged for the next step,
    - if so, increasing the amount of the d coordinate of the third vector (Z3,1) up to a limitation of the first prohibited area (4) before the next step.

8. Method according to Claim 7,

  - wherein the first prohibited area (4) defines a minimum battery current.

9. Method according to either of Claims 7 and 8,

  - wherein, if the third vector (Z3) is left unchanged in response to checking whether it lies within the first prohibited area (4), the change limitation is a limitation of the first required area (1),

  and/or

  - wherein, if the amount of the d coordinate of the third vector (Z3) is increased in response to checking whether it lies within the first prohibited area (4), the change limitation is a limitation of the first prohibited area (4).

10. Method according to one of the preceding claims,

  - wherein the d coordinates of all of the vectors (Z) are negative.

11. Method according to one of the preceding claims,

  - wherein the vectors (Z) are moved along the change limitation by means of calculating points of intersection.

12. Method according to one of the preceding claims,

  - wherein the required areas (1, 2, 3) and/or the prohibited areas (4) are circles.

13. Method according to one of the preceding claims,

  - wherein at least one required area (1), which defines a maximum voltage of the motor, depends on a speed of the motor (10).

14. Motor assembly (5), comprising

  - a permanent magnet synchronous motor (10), and
  - an electronic control device (20) configured to perform a method as claimed in one of the preceding claims.

**Revendications**

1. Procédé de fonctionnement d'un moteur synchrone à aimants permanents (10), dont les paramètres de fonctionnement sont spécifiés dans un système de coordonnées d/q bidimensionnel, le procédé comprenant les étapes suivantes :

   - recevoir une demande de couple (Tm),
   - convertir la demande de couple (Tm) en un premier pointeur (Z1), dont la coordonnée q correspond à la demande de couple (Tm) et dont la coordonnée d est nulle,
   - représenter un certain nombre de restrictions sous forme de surfaces (1, 2, 3, 4) dans le système de coordonnées d/q, chaque surface requise (1, 2, 3) représentant une restriction selon laquelle un pointeur de fonctionnement (ZB) doit se trouver dans la surface requise (1, 2, 3) et chaque surface interdite (4) représentant une restriction selon laquelle un pointeur de fonctionnement (ZB) se trouve à l'extérieur de la surface interdite (4), le procédé étant **caractérisé en ce qu'**il comprend les étapes suivantes :
   - vérifier si le premier pointeur (ZI) se trouve dans toutes les surfaces requises (1, 2, 3) et à l'extérieur de toutes les surfaces interdites (4),

      - si c'est le cas, utiliser le premier pointeur (Z1) comme pointeur de fonctionnement (ZB),
      - si ce n'est pas le cas :

   - déterminer les coordonnées q respectives les plus élevées des surfaces requises (1, 2, 3) et réduire la coordonnée q du premier pointeur (Z1) à la plus basse des coordonnées q les plus élevées des surfaces requises (1, 2, 3), de façon à obtenir un deuxième pointeur (Z2),
   - vérifier si le deuxième pointeur (Z2) se trouve à l'intérieur d'une première surface requise (1),

      - si c'est le cas, utiliser le deuxième pointeur (Z2) comme troisième pointeur (Z3),
      - si ce n'est pas le cas, modifier la coordonnée d du deuxième pointeur (Z2) de telle sorte qu'il se trouve sur une limite de la première surface requise (1) avec la plus petite coordonnée d en valeur absolue, de façon à obtenir un troisième pointeur (Z3),

   - vérifier si le troisième pointeur (Z3) se trouve à l'intérieur d'une deuxième surface requise (2),

      - si c'est le cas, utiliser le troisième pointeur (Z3) comme quatrième pointeur (Z4),
      - si ce n'est pas le cas, modifier les coordonnées du troisième pointeur (Z3) le long d'une limite de modification jusqu'au point d'intersection entre une limite de la deuxième surface requise (2) et la limite de modification ayant la coordonnée q la plus élevée, de façon à obtenir un quatrième pointeur (Z4),

      - déterminer un pointeur de fonctionnement (ZB) sur la base du quatrième pointeur (Z4),
      - commander le moteur synchrone à aimants permanents (10) au moyen de paramètres de fonctionnement qui sont indiqués par le pointeur de fonctionnement (ZB).

2. Procédé selon la revendication 1, lequel comporte les étapes suivantes pour déterminer un pointeur de fonctionnement (ZB) sur la base du quatrième pointeur (Z4) :

      - vérifier si le quatrième pointeur (Z4) se trouve à l'intérieur d'une troisième surface requise (3),
      - si c'est le cas, utiliser le quatrième pointeur (Z4) comme pointeur de fonctionnement (ZB),
      - si ce n'est pas le cas, modifier les coordonnées du quatrième pointeur (Z4) le long de la limite de modification jusqu'au point d'intersection entre une limite de la troisième surface requise (3) et la limite de modification ayant la coordonnée q la plus élevée, de façon à obtenir le pointeur de fonctionnement (ZB).

3. Procédé selon l'une des revendications précédentes,

      - la première surface requise (1) définissant une tension maximale du moteur (10), et/ou
      - la deuxième surface requise (2) définissant un courant maximal du moteur (10), et/ou
      - la troisième surface requise (3) définissant un courant de batterie maximum.

4. Procédé selon l'une des revendications précédentes,

- la limitation de modification étant une limitation de la première surface requise (1).

5. Procédé selon l'une des revendications précédentes,

- la demande de couple (Tm) définissant un couple d'entraînement ou d'accélération du moteur (10).

6. Procédé selon l'une des revendications 1 à 4,

- la demande de couple (Tm) définissant un couple de freinage du moteur (10).

7. Procédé selon la revendication 6, avant l'étape de vérification que le troisième pointeur (Z3) se trouve à l'intérieur de la deuxième surface requise (2), les étapes suivantes étant réalisées :

- vérifier si le troisième pointeur (Z3,1) se trouve à l'intérieur d'une première surface interdite (4),

- si ce n'est pas le cas, ne pas modifier le troisième pointeur (Z3) pour l'étape suivante,
- si c'est le cas, avant l'étape suivante, augmenter la coordonnée d du troisième pointeur (Z3,1) en valeur absolue jusqu'à une limitation de la première surface interdite (4).

8. Procédé selon la revendication 7,

- la première surface interdite (4) définissant un courant de batterie minimum.

9. Procédé selon l'une des revendications 7 ou 8,

- si le troisième pointeur (Z3) n'est pas modifié en réponse à la vérification qu'il se trouve dans la première zone interdite (4), la limitation de modification étant une limitation de la première zone requise (1), et/ou
- si la coordonnée d du troisième pointeur (Z3) est augmentée en valeur absolue en réponse à la vérification qu'elle se trouve dans la première zone interdite (4), la limite de modification étant une limitation de la première zone interdite (4).

10. Procédé selon l'une des revendications précédentes,

- les coordonnées d de tous les pointeurs (Z) étant négatives.

11. Procédé selon l'une des revendications précédentes,

- les pointeurs (Z) étant décalés le long de la limite de modification par calcul de points d'intersection.

12. Procédé selon l'une des revendications précédentes,

- les surfaces requises (1, 2, 3) et/ou les surfaces interdites (4) étant des cercles.

13. Procédé selon l'une des revendications précédentes,

- au moins une surface requise (1), qui définit une tension maximale du moteur, dépendant d'une vitesse de rotation du moteur (10).

14. Ensemble moteur (5), comprenant

- un moteur synchrone à aimants permanents (10) et un dispositif de commande électronique (20) qui est conçu pour mettre en œuvre un procédé selon l'une des revendications précédentes.

**Fig. 1**

**Fig. 2**

Fig. 3

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014312812 A1